# FASCICULE DE BREVET EUROPEEN

(11) **EP 0 732 023 B1**
(45) Date de publication et mention de la délivrance du brevet: **08.07.1998**
(21) Numéro de dépôt: 95902818.4
(22) Date de dépôt: 30.11.1994
(51) Int. Cl.: H04M 1/00

(54) **DISPOSITIF DE COMMUTATION POUR UN POSTE TELEPHONIQUE A COMBINE PERMETTANT LA COMMUTATION D'UN APPAREIL ANNEXE PAR SUBSTITUTION**
VORRICHTUNG ZUR UMSCHALTUNG EINES TELEFONENDGERÄTES MIT TELEFONHÖRER AUF EIN ZUSATZGERÄT
DEVICE FOR SWITCHING BETWEEN A TELEPHONE HANDSET AND A SUBSTITUTE SECONDARY APPARATUS

(30) Priorité: 01.12.1993 FR 9314383
(43) Date de publication de la demande: 18.09.1996
(73) Titulaire: PRESCOM, 78180 Montigny-le-Bretonneux (FR)
(72) Inventeur: PARMENT, Philippe, F-78000 Versailles (FR); DUBOURNAIS, Dominique, F-95280 Jouy-le-Moutier (FR)
(74) Mandataire: Cabinet Martinet & Lapoux
(86) Numéro de dépôt international: FR9401400
(87) Numéro de publication internationale: WO9515642

(56) Documents cités:
- EP-A- 0 339 212
- DE-A- 4 106 479
- FR-A- 544 855
- US-A- 2 952 739
- US-A- 4 907 267
- US-A- 5 010 565

## Description

La présente invention concerne un dispositif de commutation pour un poste téléphonique à combiné, ledit dispositif permettant de substituer au combiné un appareil annexe.

Le dispositif selon l'invention trouve de nombreuses applications: téléphonie dite "main libre" réalisée à partir d'un poste téléphonique non prévu pour cet usage, branchement à un système de téléconférence, branchement à un système pour malentendant, à un système de modulation et/ou démodulation de signaux, etc.

On connaît une première catégorie de dispositifs permettant de coupler le combiné d'un poste téléphonique à un appareil annexe. Dans ce type de dispositifs, on met en oeuvre un coupleur acoustique dans lequel on engage le combiné. En réalité, on ne substitue pas au combiné un appareil annexe, car le combiné continue à jouer son rôle: fonction restitution du son à l'aide de l'écouteur et fonction captation du son à l'aide du microphone, c'est-à-dire des transducteurs dont il est muni. L'écouteur est lui-même couplé à un microphone disposé dans le coupleur acoustique et, inversement, le coupleur acoustique est lui-même muni d'un transducteur électro-acoustique couplé au microphone du combiné. La conversion des signaux dans les deux sens est donc complexe et leur qualité peut en souffrir.

Un dispositif de ce type est décrit, par exemple, dans le brevet US-A-4 845 738 (Katsuyuki Takamo).

On connaît également une seconde catégorie de dispositifs permettant de substituer réellement un appareil annexe au combiné d'un poste téléphonique, dans lesquels on met en oeuvre un commutateur manuel à deux positions stables.

Un exemple est décrit dans le brevet US-A-4 930 156. Cette réalisation est plus particulièrement adaptée aux postes téléphoniques dans lesquels le combiné est connecté aux circuits généraux du poste téléphonique à l'aide d'un cordon terminé par un connecteur enfichable. On interpose, entre le poste téléphonique et le combiné, un boîtier, lui-même connecté à l'aide d'un cordon et d'un connecteur enfichable du même type aux circuits généraux du poste téléphonique, le combiné étant connecté sur le boîtier. Dans l'exemple décrit, le boîtier comprend divers circuits électroniques d'interface permettant de transmettre et de recevoir des signaux à et d'un ensemble écouteur-microphone. Un commutateur manuel à deux positions permet d'effectuer la substitution entre le combiné et ledit ensemble.

Cependant dans l'exemple précité, après la mise en service de l'appareil annexe, l'utilisateur est tenté de replacer, par réflexe, le combiné sur sa fourche ou dans son logement, ce qui a pour conséquence de couper de façon intempestive la communication en cours.

La présente invention se fixe donc pour objet un dispositif de commutation simple d'utilisation, d'une part, et évitant toute possibilité de fausse manoeuvre, d'autre part.

La présente invention concerne ainsi un dispositif de commutation pour un poste téléphonique à combiné, le dispositif de commutation permettant de raccorder électriquement au poste téléphonique un appareil annexe, par substitution audit combiné, le combiné étant raccordé audit dispositif de commutation, celui-ci étant raccordé au poste téléphonique à la place dudit combiné, caractérisé en ce qu'il comprend un boîtier comportant des moyens pour recevoir ledit combiné lorsqu'il est décroché du poste téléphonique; et en ce que lesdits moyens sont munis d'un organe de commutation, présentant deux états de commutation, l'organe de commutation détectant la présence dudit combiné de manière à basculer d'un premier état de commutation pour lequel seul le combiné est mis en service à un second état de commutation pour lequel seul ledit appareil annexe est mis en service.

Dans un mode de réalisation particulier, on peut prévoir un boîtier comprenant deux alvéoles destinées à recevoir, respectivement, les extrémités du combiné correspondant à l'écouteur et au microphone. Les formes exactes du boîtier et desdites alvéoles sont naturellement imposées par la configuration du combiné.

Dans le fond de ces alvéoles, par exemple, on dispose un organe de commutation à contacts galvaniques. Le simple fait de déposer le combiné sur ce boîtier actionne l'organe de commutation. Il s'ensuit que le combiné est mis hors service et que, simultanément un appareil annexe lui est substitué.

Dans un autre mode de réalisation, on prévoit un boîtier muni d'un seul réceptacle destiné à recevoir l'une des extrémités du combiné. Comme précédemment, ce réceptacle est muni d'un organe de commutation détectant la présence du combiné.

Selon une variante de réalisation, au lieu de poser le combiné sur un boîtier, on peut utiliser un réceptacle de type fourche, crochet ou corbeille. Ce réceptacle actionne, comme précédemment, sous le poids du combiné, un organe de commutation qui déclenche la substitution.

Selon une autre variante de réalisation, c'est la partie qui relie les deux extrémités du combiné qui actionne sous le poids du combiné, un organe de commutation qui déclenche la substitution.

Enfin, dans des modes de réalisation particuliers, au lieu d'utiliser un organe de commutation à contacts galvaniques, on peut mettre en oeuvre d'autres technologies: commutateur électro-optique, capacitif, magnétique, etc.

Ainsi la présente invention consiste en ce que le fait de déposer le combiné téléphonique sur/dans le réceptacle d'un dispositif de commutation annexe et différent de celui du poste téléphonique actionne la commutation sans ambiguïté du combiné vers un appareil annexe.

Autrement dit, la présente invention consiste en ce que, la communication étant établie, la substitution du combiné par un appareil annexe est réalisée par un organe de commutation commandé par la présence du combiné téléphonique dans le réceptacle du dispositif de commutation relié électriquement au poste téléphonique.

L'invention atteint donc bien les buts qu'elle s'est fixée. Le fait de poser le combiné dans ou sur un réceptacle ou de le pendre à un élément adapté, permet de réaliser, à la fois simplement et sans ambiguïté, la commutation désirée et de substituer au combiné un appareil annexe.

En outre, les circuits "physiques" nécessaires à cette commutation sont simples à réaliser. En particulier, pour les postes de technologie récente, il suffit de déconnecter le combiné et de le rebrancher sur un connecteur adapté dont sera muni ledit boîtier et de brancher celui-ci à la place du connecteur du combiné. De la même manière, on peut prévoir un connecteur adapté supplémentaire sur le boîtier pour brancher l'appareil annexe.

Les opérations inverses permettent de revenir à l'état initial tout aussi simplement.

L'invention sera mieux comprise et d'autres caractéristiques et avantages apparaîtront à la lecture de la description qui suit au regard des figures annexées et parmi lesquelles:
- la figure 1 illustre schématiquement un poste téléphonique à combiné;
- la figure 2 illustre un dispositif de commutation associé à un poste téléphonique selon l'art antérieur;
- la figure 3 illustre schématiquement un mode de réalisation d'un dispositif de commutation selon l'invention;
- les figures 4 et 5 illustrent de façon plus détaillée le fonctionnement d'un dispositif de commutation selon l'invention, dans un mode de réalisation particulier;
- les figures 6 et 7 illustrent des variantes de réalisation supplémentaires de dispositifs de commutations selon l'invention.

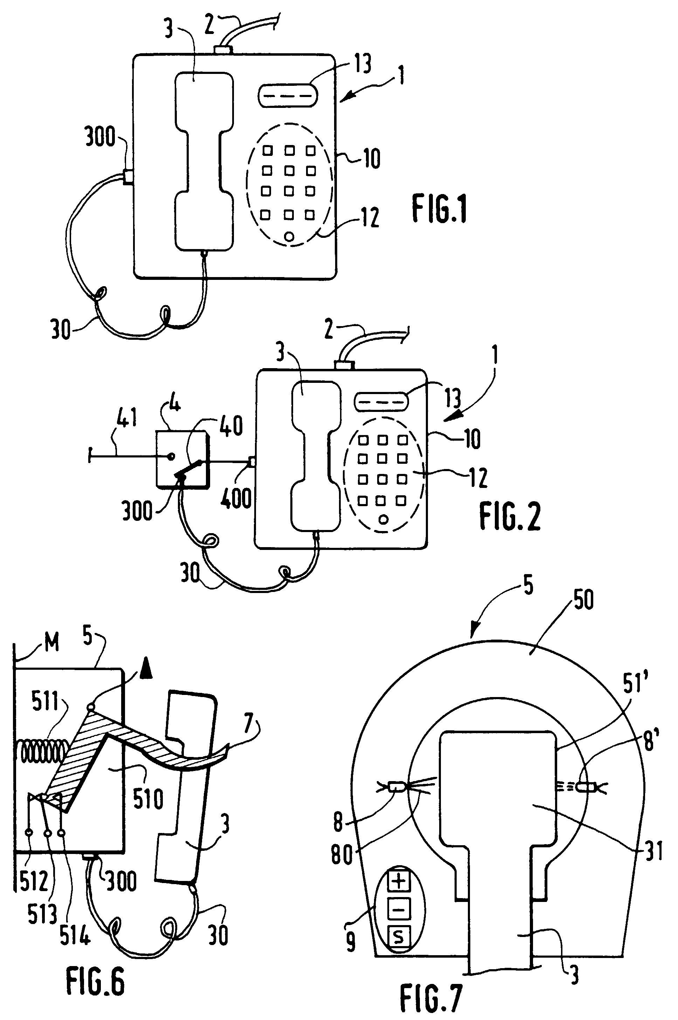

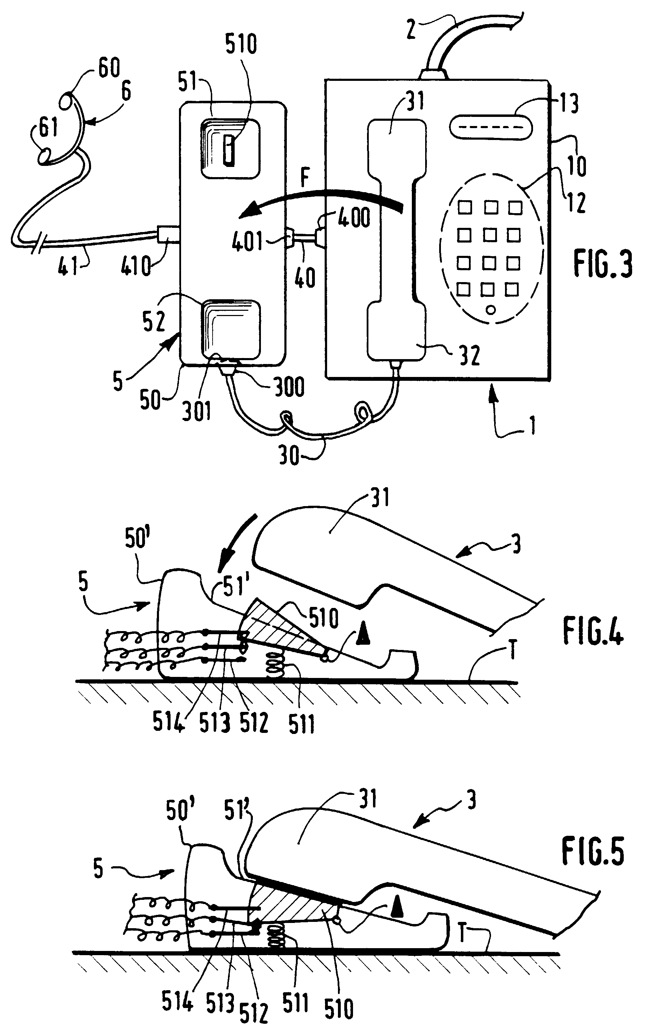

La figure 1 illustre un poste téléphonique 1 muni d'un combiné 3 et raccordé à un réseau téléphonique public ou privé (non représenté) par un câble approprié 2. Pour fixer les idées, sans que cela soit limitatif, on supposera que le poste téléphonique est du type à touches. Le boîtier 10 comprend donc une zone de touches 12 complétées éventuellement de voyants lumineux (diodes électroluminescentes par exemple). Dans l'exemple illustré, le poste téléphonique 1 comporte aussi un écran de visualisation 13, habituellement à cristaux liquides. Le combiné est relié aux circuits généraux (non représentés) du poste téléphonique 1 par un câble 30. Dans les postes de technologie récente, le plus souvent, le câble 30 est raccordé à l'aide d'un connecteur enfichable 300. Cette disposition permet, notamment, de changer facilement le combiné 3 si celui-ci est défectueux.

Il s'agit généralement d'un connecteur du type connu sous la dénomination anglo-saxonne de "modular jack". Il fait également l'objet des normes ISO 8867. Ce type de connecteur est encore connu sous divers signes tels que RJxx, xx représentant le type exact (xx peut prendre des valeurs telles que 12, 45, etc.) en fonction, par exemple, du nombre de contacts.

Dans ce qui suit, les éléments identiques ou similaires portent les mêmes références sur les figures et ne sont décrits à nouveau qu'en tant que de besoin.

La figure 2 illustre un dispositif de commutation 4 selon l'art antérieur. Un appareil annexe (non représenté) se substitue au combiné 3 selon l'état d'un commutateur manuel 40 à deux positions stables. Celui-ci est disposé dans un boîtier 4 établissant une liaison sélective entre le câble 30 et un câble 41 relié à l'appareil annexe, d'une part, et le poste téléphonique 1, d'autre part. Le dispositif de commutation 4 est relié au boîtier 10 du poste téléphonique 1 par un câble 40 muni d'un connecteur 400 qui s'enfiche en lieu et place du connecteur 300 dont est muni le câble 30. Ce dernier est enfiché dans un connecteur apparié disposé sur le boîtier 4.

Cette disposition est similaire à celle décrite dans le brevet US-A-4 930 156 précité.

Elle présente les inconvénients qui ont été rappelés.

La figure 3 illustre schématiquement un mode de réalisation d'un dispositif de commutation 5 selon l'invention.

Il comprend un boîtier 50 muni de deux réceptacles ou alvéoles, 51 et 52, destinés à recevoir, respectivement, les extrémités "écouteurs" 31 et "microphone" 32 du combiné 3.

Ce dernier repose normalement sur le logement prévu à cet effet dans le boîtier 10. Lorsque l'on désire substituer au combiné 3 un appareil annexe 6, par exemple, comme illustré sur la figure, un casque muni d'un écouteur 60 et d'un microphone 61, on pose le combiné 3 sur le boîtier 50 du dispositif de commutation 5. Plus précisément, comme indiqué ci-dessus, on introduit les extrémités, écouteur 31 et microphone 32 du combiné 3 dans leurs réceptacles respectifs, 51 et 52 (mouvement symbolisé par la flèche F).

Dans l'exemple illustré, le réceptacle 51 est muni, par exemple sur son fond, d'un organe de commutation 510 à contacts galvaniques à deux états stables de commutation. Du fait du poids ou plus généralement de la présence du combiné 3, l'organe de commutation 510 est actionné. Cette action permet d'obtenir la commutation désirée. Le combiné 3 est mis hors service et, simultanément, l'appareil annexe 6 lui est substitué. Le fonctionnement de l'organe de commutation 510 sera explicité dans ce qui suit en relation avec les figures 4 et 5.

De façon avantageuse, si le type de poste téléphonique le permet, c'est-à-dire si le cordon 30 est muni d'un connecteur enfichable 300, celui-ci est déconnecté du boîtier 10 du poste téléphonique 1. On munit le boîtier 50 du dispositif de commutation 5 d'un connecteur femelle 301 destiné à recevoir le connecteur 300. De la même manière, on connecte le boîtier 50 du dispositif de commutation 5, en lieu et place du combiné, à l'aide d'un cordon 40 muni des connecteurs 400 (côté poste téléphonique 1) et 401 (du côté du boîtier de commutation 5). Enfin, l'appareil annexe 6 peut être connecté au boîtier 50 du dispositif de commutation 5 à l'aide du cordon 41 muni d'un connecteur 410.

Cette disposition avantageuse permet de brancher divers types d'appareils annexes sur le même boîtier 50 du dispositif de commutation 5 en déconnectant simplement le connecteur 410 et en reconnectant un autre appareil annexe. On peut également envisager, dans une variante de réalisation non illustrée, de brancher en parallèle plusieurs appareils annexes.

D'autre part, on peut mettre hors service, de façon simple également, le boîtier 50 du dispositif de commutation 5 en déconnectant le cordon 40 (par le connecteur 400) et en connectant à sa place, sur le boîtier 10, le cordon 30 (par le connecteur 300), pour rebrancher de façon permanente le combiné 3.

Naturellement, l'organe de commutation 510 peut être placé dans le réceptacle 52 au lieu d'être placé dans le réceptacle 51. De la même manière, il pourrait tout aussi bien être placé sur les parois latérales de ces réceptacles ou encore sur la face supérieure du boîtier 50 du dispositif de commutation 5 si la forme du combiné s'y prête.

Cependant la localisation de l'organe de commutation 510 dans le fond d'un des réceptacles 51 ou 52 est probablement plus indiquée car elle ne nécessite pas un ajustement précis de la position du combiné 3. Si les dimensions de l'organe de commutation 510 sont suffisamment importantes et même si les dimensions et formes des réceptacles 51 et 52 ne sont pas en corrélation étroite avec celles du combiné 3, la commutation désirée s'effectuera sans que l'on ait à prendre de précautions particulières.

Ceci peut d'ailleurs être mis à profit pour réaliser un boîtier, sinon universel, mais du moins convenant à de nombreux types de postes téléphoniques. Il suffit d'adopter des dimensions relativement importantes pour les réceptacles 51 et 52 et de régler leur écartement également en conséquence, en tenant compte des postes téléphoniques les plus courants du marché.

On peut simplifier le boîtier 50 du dispositif de commutation 5. En effet, un seul réceptacle est nécessaire pour accueillir l'une des extrémités du combiné 3, de manière préférentielle du côté de l'écouteur car l'extrémité du côté microphone est en général munie du cordon 30 de raccordement, ce qui peut gêner, dans certaines configurations, la pose du combiné 3 sur le boîtier 50 du dispositif de commutation 5.

Un mode de réalisation de ce type est illustré par les figures 4 et 5. Le boîtier 50' comprend une alvéole 51' unique dont le fond est, avantageusement incliné par rapport au plan sur lequel le boîtier est posé, par exemple le dessus sensiblement horizontal d'une table T.

L'organe de commutation 510, placé sur le fond de l'alvéole 51' dans l'exemple illustré, est mobile autour d'un axe sensiblement horizontal ▲.

Un système de rappel à ressort 511, ou tout système approprié, le maintient en position haute. Lorsque la partie écouteur 31 du combiné 3 n'est pas introduite dans l'alvéole 51' (figure 4), un jeu de contacts intermédiaires 513 ferme des circuits électriques avec un premier jeu de contacts 514.

Tout au contraire, lorsque par son propre poids ou plus généralement sa présence, le combiné 3 fait pivoter l'organe de commutation 510 autour de son axe ▲ et écrase le ressort 511 (figure 5), le jeu de contacts intermédiaires ferme les circuits électriques avec un second jeu de contacts 513.

Cette action permet la substitution automatique et sûre de l'appareil annexe 6 (figure 3) au combiné 3.

Naturellement le nombre exact de contacts de chaque jeu 512 à 514 ainsi que la configuration exacte des liaisons électriques à établir peuvent dépendre du type de poste téléphonique 1 utilisée et,
éventuellement, des normes en vigueur dans le pays où le dispositif est mis en oeuvre.

Ceci ne constitue que des choix technologiques à la portée de l'homme de métier.

Lorsqu'on soulève le combiné 3, on revient aux conditions initiales (figure 4), le ressort 511 se détend et le combiné 3 est de nouveau relié au poste téléphonique 1, sans qu'il y ait un risque quelconque de coupure intempestive de la communication téléphonique en cours.

Dans une variante de réalisation supplémentaire, illustrée par la figure 6, le boîtier 50 du dispositif de commutation 5 peut être fixé à un mur M ou plus généralement à un panneau sensiblement vertical. Dans ce cas, le réceptacle peut être constitué par une fourche 7 ou un organe similaire destiné à recevoir, en suspension, le combiné 3. Cette fourche 7 est mobile en rotation autour d'un axe horizontal ▲ et agit sur l'organe de commutation 510 proprement dit.

Lorsque le combiné 3 n'est pas accroché à la fourche 7, celle-ci est repoussée par des moyens élastiques de rappel 511 de l'organe de commutation 510, par exemple un ressort. Lorsque le combiné 3 est accroché, il fait pivoter la fourche 7 autour de son axe et écrase le ressort 511.

Comme précédemment, la fourche 7, par le biais de l'organe de commutation 510, agit sur des jeux de contacts 512 à 514, ce qui déclenche la substitution de l'appareil annexe (figure 3:6) au combiné 3, lorsque ce dernier est accroché sur la fourche 7.

En outre, comme il a été indiqué, les moyens de commutation peuvent mettre en jeu des technologies autres que celles fondées sur un contact galvanique. On peut utiliser des détecteurs de présence optoélectroniques, capacitifs ou magnétiques.

La figure 7 illustre un exemple de capteur électro-optique constitué par une source de lumière 8 et un photodétecteur 8'.

Le boîtier 50 du dispositif de commutation 5 est d'un type similaire à celui décrit en relation avec les figures 4 et 5, c'est-à-dire muni d'une alvéole unique 51' destinée à recevoir la partie écouteur 31 (par exemple) du combiné 3.

La source de lumière 8 et le photodétecteur 8' sont disposés (dans l'exemple illustré) sur les parois latérales de l'alvéole 51'. La source de lumière 8 émet un faisceau 80 détecté par le photodétecteur 8'. Lorsqu'on dépose la partie écouteur 31 du combiné dans l'alvéole 51', celle-ci interrompt le faisceau 80 de lumière émise.

Cette action permet de détecter la présence du combiné 3. Des circuits électroniques appropriés recevant le signal de sortie du photodétecteur 8' commandent la commutation désirée, c'est-à-dire effectuent la substitution de l'appareil annexe (figure 3:6) au combiné 3 et mettent ce dernier hors service.

Des capteurs, autres que galvaniques, comme c'est le cas dans l'exemple qui vient d'être illustré, ont cependant l'inconvénient de nécessiter la présence dans le boîtier 50 du dispositif de commutation 5 d'une source d'énergie électrique (ou pour le moins de l'alimenter en énergie électrique) et des circuits électroniques précités.

On peut également incorporer dans le boîtier 50 du dispositif de commutation 5 des fonctions auxiliaires destinées notamment à l'appareil annexe (figure 3:6). Sur la figure 7, ces fonctions sont symbolisées par la référence globale 9. Il peut s'agir de commande de volume "+" et "-" si le boîtier incorpore un amplificateur audio, d'un bouton "silence" référencé "S", fonction notamment utile en téléphonie "main libre", etc.

On peut aussi incorporer dans le boîtier 50 du dispositif de commutation 5 non seulement des fonctions auxiliaires mais encore tout ou partie de l'appareil annexe.

Il va de soi que ces aspects complémentaires de l'invention sont compatibles avec n'importe lequel des modes de réalisation décrits en relation avec les figures 3 à 6.

L'invention n'est naturellement pas limitée aux seuls exemples de réalisation précisément décrits, notamment au regard des figures 3 à 7.

Comme il a été indiqué, les formes et configurations que peut prendre le boîtier 50 du dispositif de commutation 5 sont susceptibles de nombreuses variantes sans sortir du cadre de l'invention. Ces paramètres dépendent notamment du type de poste téléphonique 1 associé au dispositif de commutation.

L'appareil annexe 6 de la figure 3 peut également être de divers types: casque ou organe similaire comprenant un écouteur et un microphone comme illustré sur la figure 3, et permettant la téléphonie main libre, appareil de téléconférence avec des moyens de restitution de signaux sonores, haut-parleur ou transducteur électro-acoustique, et de captation (microphones) de signaux sonores, appareil téléphonique supplémentaire, etc. On peut également placer, comme le suggère la réalisation illustrée par la figure 7, tout ou partie d'une électronique associée audit appareil annexe: correction du son, télécommande, etc.

D'autre part, dans le cas de la réalisation représentée sur la figure 3, la ou les alvéoles ménagées sur le boîtier 50 du dispositif de commutation 5 pourraient être remplacées par une partie en saillie pouvant s'emboîter dans la cavité généralement prévue dans l'écouteur du combiné.

## Revendications

1. Dispositif de commutation (5) pour un poste téléphonique (1) à combiné (3), le dispositif de commutation (5) permettant de raccorder électriquement au poste téléphonique (1) un appareil annexe (6), par substitution audit combiné (3), le combiné (3) étant raccordé audit dispositif de commutation, celui-ci étant raccordé au poste téléphonique (1) à la place dudit combiné (3), caractérisé en ce qu'il comprend un boîtier (50, 50') comportant des moyens (51, 51', 52, 7) pour recevoir ledit combiné (3) lorsqu'il est décroché du poste téléphonique (1); et en ce que lesdits moyens (51, 51', 52, 7) sont munis d'un organe de commutation (510, 8, 8') présentant deux états de commutation, l'organe de commutation (510, 8, 8'), détectant la présence dudit combiné (3) de manière à basculer d'un premier état de commutation pour lequel seul le combiné (3) est mis en service à un second état de commutation pour lequel seul ledit appareil annexe (6) est mis en service.

2. Dispositif selon la revendication 1, caractérisé en ce que ledit boîtier (50, 50') étant destiné à être disposé sur un plan sensiblement horizontal (T), celui-ci est muni d'au moins une alvéole (51, 51', 52), celle-ci étant destinée à recevoir l'une des extrémités (31) du combiné (3) et en ce que ledit organe de commutation (510, 8, 8') est disposé dans ladite alvéole (51, 51', 52), de manière à détecter la présence de ladite extrémité (31) du combiné dans celle-ci et obtenir le basculement entre les deux états de commutation précités.

3. Dispositif selon la revendication 1, caractérisé en ce que ledit boîtier (50) étant destiné à être disposé sur un plan sensiblement vertical (M), celui-ci est muni d'un organe (7) agissant sur ledit organe de commutation (510, 8, 8') lorsque le combiné (3) est accroché à l'organe (7) pour obtenir le basculement entre les deux états de commutation précités.

4. Dispositif selon l'une quelconque des revendications 1 à 3, caractérisé en ce que ledit organe de commutation (510) est un organe comprenant des contacts de type galvanique (512 à 514).

5. Dispositif selon l'une quelconque des revendications 1 à 3, caractérisé en ce que ledit organe de commutation est un organe à effet électro-optique (8, 8').

6. Dispositif selon la revendication 5, caractérisé en ce que ledit organe à effet électro-optique comprend une source de lumière (8) et un photodétecteur (8'), et en ce que le combiné (3) interrompt un faisceau lumineux (80) émis par la source de lumière (8), cette interruption étant détectée par le photodétecteur (8') pour obtenir le basculement entre les deux états de commutation précités.

7. Dispositif selon l'une quelconque des revendications 1 à 6, caractérisé en ce que ledit boîtier (50) est muni de circuits électroniques commandant ledit appareil annexe (6).

8. Dispositif selon la revendication 7, caractérisé en ce que lesdits circuits électroniques sont associés à des fonctions (9) de téléphonie dite main libre.

9. Dispositif selon l'une quelconque des revendications 1 à 7, caractérisé en ce que ledit appareil annexe (6) est un système de modulation et/ou démodulation de signaux.

## Claims

1. Switching device (5) for a telephone set (1) having a handset (3), the switching device (5) being used to connect an auxiliary device (6) electrically to the telephone set (3) by substituting it for said handset (3), the handset (3) being connected to said switching device, the latter being connected to the telephone set (1) in place of said handset (3), characterized in that it comprises a casing (50, 50') including means (51, 51', 52, 7) adapted to receive said handset (3) when it is lifted off the telephone set (1) ; and in that said means (51, 51', 52, 7) are provided with a switching member (510, 8, 8') having two switching states, the switching member (510, 8, 8') detecting the presence of said handset (3) to switch from a first switching state in which only the handset (3) is in service to a second switching state in which only said auxiliary device (6) is in service.

2. Device according to claim 1, characterized in that said casing (50, 50') being adapted to be placed on a substantially horizontal plane (T), said casing is provided with at least one compartment (51, 51', 52) adapted to receive one (31) of the ends of the handset (3) and in that said switching member (580, 8, 8') is disposed in said compartment (51, 51', 52) so as to detect the presence of said end (31) of the handset therein and to bring about the switching between the two aforesaid switching states.

3. Device according to claim 1, characterized in that said casing (50) being adapted to be placed in a substantially vertical plane (M), said casing is provided with an element (7) acting on said switching member (510, 8, 8') when the handset (3) is hooked onto the element (7) to bring about the switching between the two aforesaid switching states.

4. Device according to any one of claims 1 to 3, characterized in that said switching member (510) is a member comprising galvanic type contacts (512 to 514).

5. Device according to any one of claims 1 to 3, characterized in that said switching member is a member of the electro-optical type (8, 8').

6. Device according to claim 5, characterized in that said member of the electro-optic type comprises a light source (8) and a photodetector (8'), and in that the handset (3) interrupts a light beam (80) emitted by the light source (8), said interruption being detected by the photodetector (8') to bring about the switching between the two aforesaid switching states.

7. Device according to any one of claims 1 to 6, characterized in that said casing (50) is provided with electronic circuits controlling said auxiliary device (6).

8. Device according to claim 7, characterized in that said electronic circuits are associated with hands-free telephony functions (9).

9. Device according to any one of claims 1 to 7, characterized in that said auxiliary device (6) is a signal modulation and/or demodulation system.

## Patentansprüche

1. Umschaltvorrichtung (5) für eine Telefonsprechstelle (1) mit Handapparat (3), wobei die Umschaltvorrichtung (5) den elektrischen Anschluß eines Zusatzgeräts (6) an die Telefonsprechstelle (1) durch Substitution des besagten Handapparats (3) erlaubt, wobei der Handapparat (3) an die besagte Umschaltvorrichtung angeschlossen ist, welche an die Telefonsprechstelle (1) anstelle des besagten Handapparats (3) angeschlossen ist, dadurch gekennzeichnet, daß ein Gehäuse (50, 50') mit Mitteln (51, 51', 52, 7) vorgesehen ist, um den besagten Handapparat (3) aufzunehmen, wenn dieser in der Telefonsprechstelle (1) abgehängt ist; wobei die besagten Mittel (51, 51', 52, 7) mit einem Umschaltorgan (510, 8, 8') versehen sind, das zwei Umschaltzustände aufweist, wobei das Umschaltorgan (510, 8, 8') bei fesetgestelltem Vorhandensein des besagten Handapparats (3) von einem ersten Umschaltzustand, bei welchem nur der Handapparat (3) in Betrieb gesetzt wird, zu einem zweiten Umschaltzustand umschaltet, bei welchem nur das besagte Zusatzgerät (6) in Betrieb gesetzt wird.

2. Vorrichtung nach Anspruch 1, dadurch gekennzeichnet, daß bei einer im wesentlichen horizontalen Anordnung (T) des Gehäuses das Gehäuse (50, 50'), mit wenigstens einer Muschel (51, 51', 52) versehen ist, welche dazu bestimmt ist, eines der zwei Enden (31) des Handapparats (3) zu empfangen, wobei das besagte Umschaltorgan (510, 8, 8') in der besagten Muschel (51, 51', 52) derart angeordnet ist, daß es das Vorhandensein des besagten Endes (31) des Handapparats in dieser wahrnehmen und das Kippen zwischen beiden vorgenannten Umschaltzuständen bewirken kann.

3. Vorrichtung nach Anspruch 1, dadurch gekennzeichnet, daß bei einer im wesentlichen vertikalen Anordnung (M) des Gehäuses das Gehäuse (50) mit einem Organ (7) versehen ist, das auf das Umschaltorgan (510, 8, 8') einwirkt, wenn der Handapparat (3) auf das Organ (7) aufgehängt wird, um das Kippen zwischen den zwei vorgenannten Umschaltzuständen zu bewirken.

4. Vorrichtung nach irgendeinem der Ansprüche 1 bis 3, dadurch gekennzeichnet, daß das besagte Umschaltorgan (510) Kontakte galvanischer Art (512 bis 514) enthält.

5. Vorrichtung nach irgendeinem der Ansprüche 1 bis 3, dadurch gekennzeichnet, daß das besagte Umschaltorgan eine elektro-optische Wirkung (8, 8') hat.

6. Vorrichtung nach Anspruch 5, dadurch gekennzeichnet, daß das besagte Organ mit elektro-optischer Wirkung eine Lichtquelle (8) und einen Photodetektor (8') enthält, wobei der Handapparat (3) ein Strahlenbündel (80) unterbricht, das durch die Lichtquelle (8) ausgestrahlt wird, und diese Unterbrechung durch den Photodetektor (8') erfaßt wird, um somit das Kippen zwischen beiden vorgenannten Umschaltzuständen zu bewirken.

7. Vorrichtung nach irgendeinem der Ansprüche 1 bis 6, dadurch gekennzeichnet, daß das besagte Gehäuse (50) mit elektronischen Stromkreisen versehen ist, die besagtes Zusatzgerät (6) steuern.

8. Vorrichtung nach Anspruch 7, dadurch gekennzeichnet, daß die besagten elektronischen Stromkreise sogenannten Freisprechfunktionen (9) zugeordnet sind.

9. Vorrichtung nach irgendeinem der Ansprüche 1 bis 7, dadurch gekennzeichnet, daß das besagte Zusatzgerät (6) ein System zur Signalmodulation und/oder -demodulation ist.
